# FASCICULE DE BREVET EUROPEEN

(11) **EP 1 113 852 B1**
(45) Date de publication et mention de la délivrance du brevet: **24.09.2003**
(21) Numéro de dépôt: 99936662.8
(22) Date de dépôt: 02.08.1999
(51) Int. Cl.: B01D 29/21

(54) **ELEMENT FILTRANT CONSISTANT DANS DE L'OUATE DE CELLULOSE ABSORBANT, SOUS LA FORME D'UN CYLINDRE TUBULAIRE**
FILTERELEMENT, WELCHES AUS EINEM ABSORBIERENDEN TISSUE PAPIER BESTEHT IN FORM EINES ZYLINDERS
FILTERING ELEMENT CONSISTING OF ABSORBENT TISSUE PAPER IN THE FORM OF A TUBULAR CYLINDER

(30) Priorité: 04.08.1998 FR 9809986
(43) Date de publication de la demande: 11.07.2001
(73) Titulaire: Georgia-Pacific France, 68320 Kunheim (FR)
(72) Inventeur: MALECOT, Yves, 27110 Crosville la Vieille (FR); HUNGLER, Joel, 27600 Ailly (FR)
(74) Mandataire: Cortier, Sophie
(86) Numéro de dépôt international: FR9901904
(87) Numéro de publication internationale: WO00007691

(56) Documents cités:
- GB-A- 1 037 593
- US-A- 3 399 092
- US-A- 3 468 425

## Description

L'invention concerne un élément filtrant.

L'invention se rapporte plus particulièrement à un élément filtrant pour la filtration d'un fluide, du type dans lequel l'élément filtrant est destiné à être utilisé dans un dispositif de filtration comportant un boîtier cylindrique, du type dans lequel l'élément filtrant est constitué de matériau en papier absorbant, sous forme de feuille, organisé de manière à former un cylindre tubulaire, et du type dans lequel l'élément filtrant est agencé dans le boîtier de manière à séparer une partie radiale externe d'une partie radiale interne, le fluide circulant au travers de l'élément filtrant selon une direction générale centripète.

Un tel élément filtrant est par exemple décrit dans le document FR-A 2 624 397.

Dans ce document, il est décrit un élément filtrant qui est plus particulièrement destiné à être utilisé pour réaliser le filtrage ultrafin de l'huile de lubrification d'un moteur à combustion interne de véhicule automobile.

De tels éléments filtrants sont destinés à être reçus dans un boîtier d'un dispositif de filtration dans lequel un fluide entre dans une partie périphérique et ressort, après filtration, par une zone centrale.

Dans le document FR-A 2 624 397, l'élément filtrant est réalisé sous la forme d'une bande de papier filtre enroulée autour d'un mandrin réalisé en carton, le mandrin étant percé d'une série de trous pour permettre le passage du fluide. En effet, pour accéder à la sortie du boîtier du dispositif, l'huile doit traverser d'une manière ou d'une autre le mandrin en carton.

Les éléments filtrants de ce type présentent de nombreux avantages. En effet, leur mode de fabrication fait appel à des techniques largement répandues dans des domaines concernant notamment la fabrication de rouleaux de papier hygiénique ou de rouleaux de papier essuie-tout. Le fait de constituer l'élément filtrant avec une bande de papier enroulée est particulièrement avantageux car l'enroulement d'une telle bande est facile à réaliser et la qualité de filtrage obtenu est particulièrement bonne, cette dernière pouvant de plus être adaptée en fonction du matériau utilisé et de la densité de son enroulement.

Toutefois, l'élément filtrant décrit dans le document FR-A 2 624 397 présente un grave inconvénient qui est dû à la présence du mandrin en carton. En effet, on s'est aperçu que la présence de ce mandrin en carton était une source de perte de charge très importante pour la circulation du fluide au travers de l'élément filtrant, notamment pour les fluides tels que les huiles qui présentent une viscosité importante.

En effet, il faut noter d'une part que la section passante pour le fluide au travers du filtre est alors limitée au cumul des sections passantes de chacun des perçages effectués dans le mandrin en carton. Or, dans le dispositif représenté, cette section passante ne représente que quelques pour-cents de la superficie totale de la surface cylindrique interne de l'enroulement de papier.

Par ailleurs, le fait que les trous soient relativement éloignés les uns des autres, et en nombre limité, fait qu'il se crée, au travers du filtre, des zones de passage privilégiées pour le fluide, notamment bien entendu à proximité de ces trous. Or, du fait que certaines des zones sont amenées à filtrer plus d'huile que d'autres, ces zones sont amenées à recueillir plus de dépôts de particules que d'autres zones de l'élément filtrant, et elles sont donc plus rapidement encrassées.

Ainsi, les zones de passage privilégiées du fluide devenant encrassées, la qualité de filtration baisse sensiblement, ceci étant de plus accompagné d'une augmentation de la perte de charge au travers de l'élément filtrant.

De ce fait, il en résulte qu'un élément filtrant comportant un mandrin central perforé doit bien souvent être remplacé prématurément, sans que l'intégralité du volume de l'élément filtrant ait atteint un niveau d'encrassement justifiant d'un tel remplacement.

L'invention a donc pour objet de proposer une nouvelle conception d'un élément filtrant qui permet d'une part de diminuer de manière importante la perte de charge au travers de l'élément filtrant, et d'autre part, d'augmenter la durée de vie de l'élément filtrant par une utilisation homogène de l'ensemble du volume de celui-ci.

Conformément à l'invention, l'élément filtrant pour la filtration d'un fluide, dans un dispositif de filtration comportant un boîtier cylindrique, dans lequel l'élément filtrant forme un cylindre tubulaire agencé dans le boîtier de manière à séparer une partie radiale externe d'une partie radiale interne, le fluide circulant au travers de l'élément filtrant selon une direction générale centripète, et caractérisé par le fait qu'il consiste en un rouleau d'ouate de cellulose compact sans mandrin.

Selon d'autres caractéristiques de l'invention :
- le diamètre interne moyen du cylindre tubulaire est supérieur au vingtième de son diamètre moyen externe ;
- le diamètre interne moyen du cylindre tubulaire est supérieur au quart de son diamètre moyen externe ;
- le diamètre interne moyen de cylindre tubulaire est compris entre un tiers et la moitié de son diamètre moyen externe ;
- le diamètre interne moyen du cylindre tubulaire est supérieur à 25 mm ;
- la paroi intérieure du cylindre tubulaire a une forme conique ou cylindrique et une section en coupe transversale de forme circulaire, polygonale ou autre ;
- l'élément filtrant du type cylindrique comprend sur sa surface au moins un détrompeur ;
- l'élément filtrant est constitué d'une bande de matériau en papier absorbant, formée d'une unique feuille continue, enroulée selon un cylindre tubulaire ;
- l'élément filtrant est constitué d'une série de feuilles de matériau en papier absorbant enchevêtrées pour former un cylindre tubulaire ;
la feuille comporte plusieurs plis ;
- le rouleau est utilisé dans un dispositif de filtration d'huile pour un moteur de véhicule automobile.

On connaît le brevet US 3468425 qui porte sur un élément filtrant constitué d'un enroulement sans mandrin d'une feuille de papier filtre mais il prévoit le renforcement de ses parois au moyen d'une résine.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe axiale illustrant un dispositif de filtration muni d'un élément filtrant conforme aux enseignements de l'invention ; et
- la figure 2 est une vue schématique en coupe transversale selon le plan indiqué par la ligne 2-2 de la figure 1.

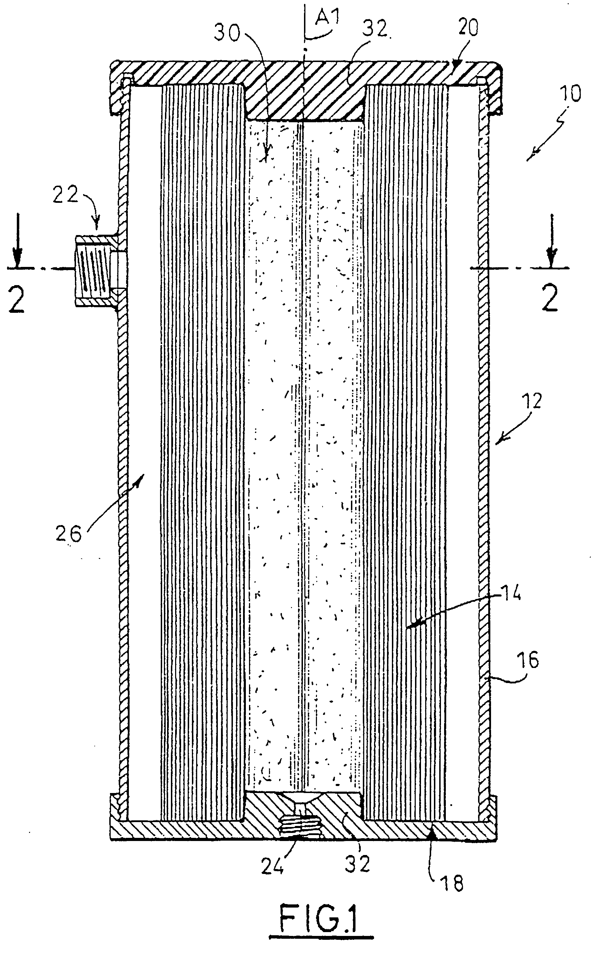

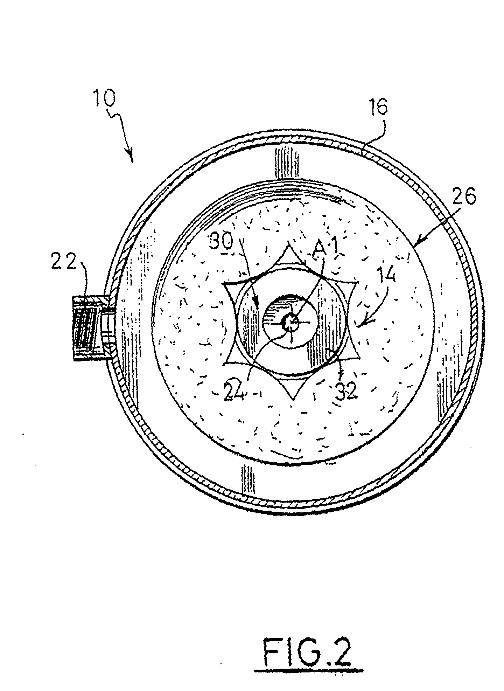

On a illustré sur les figures 1 et 2 un dispositif de filtration de fluide 10 qui comporte pour l'essentiel un boîtier 12 et un élément filtrant 14. Le boîtier 12 comporte une paroi latérale 16, cylindrique de révolution autour de l'axe A1, et il est refermé à ses deux extrémités axiales par deux couvercles transversaux inférieur 18 et supérieur 20. Les couvercles 18, 20 sont fixés aux deux extrémités axiales de la paroi latérale 16, par exemple par vissage ou par tout autre moyen connu.

Le boîtier 12 comporte une bouche d'entrée 22 qui débouche radialement dans la paroi latérale 16 pour permettre à un fluide de pénétrer à l'intérieur du boîtier 12. Le couvercle inférieur 18 est muni, en son centre, d'un orifice d'orientation axiale 24 qui forme une bouche de sortie pour que le fluide, après filtration, puisse s'échapper du boîtier 12.

Dans le mode de réalisation illustré, l'élément filtrant 14 est réalisé sous la forme d'une bande de papier tel que de la ouate de cellulose enroulée selon un enroulement cylindrique, sensiblement de révolution autour de l'axe A1, et qui, conformément aux enseignements de l'invention, est dépourvu de mandrin central, de sorte que la paroi interne de l'élément filtrant est formée par les spires internes de l'enroulement du papier.

L'élément filtrant illustré est ainsi susceptible d'être fabriqué conformément aux enseignements du document FR-A 2 554 799 auquel on se référera de manière expresse pour connaître les détails du procédé de réalisation de cet élément filtrant. Toutefois, en résumé, ce procédé consiste à enrouler la bande de papier autour d'une barre de forme conique ou cylindrique avec une section en coupe transversale de forme circulaire, polygonale, ou autre, ou à tout le moins dont les sections présentent des arêtes saillantes d'orientation générale sensiblement parallèle à l'axe d'enroulement ou en formant autour de celui-ci, une hélicoïde simple ou complexe, le papier subissant un pliage au niveau de ces arêtes. Un rouleau presseur, appliqué contre la partie externe de l'enroulement en formation permet d'obtenir un enroulement particulièrement compact, et, lorsque la barre d'enroulement présente en section transversale des arêtes, de bien marquer le pliage du papier au contact de ces arêtes.

Dans un mode de réalisation simple, la barre d'enroulement présente la section d'un cylindre à base polygonale, par exemple à base hexagonale.

Ce mode de réalisation est un exemple parmi d'autres. L'invention comprend des barres d'enroulement de toute autre forme tubulaire, par exemple conique ou cylindrique ayant une section en coupe transversale de forme circulaire ou autre.

Une fois l'enroulement terminé, la barre d'enroulement est retirée du centre de l'enroulement de sorte que la paroi intérieure de celui-ci présente alors sensiblement un profil du type de celui illustré à la figure 2, dans lequel cette paroi interne est formée d'éléments de surface convexes réunis par des points de rebroussement constitués par les marques de pliage laissées par les arêtes de la barre d'enroulement.

De par ce profil, et notamment de par l'existence de ces points de rebroussement, les spires internes de l'enroulement ne peuvent se dévider par l'intérieur de sorte que, même libre, l'élément filtrant conserve sa forme. La paroi intérieure de section définie par la barre d'enroulement peut également être renforcée comme décrit dans ce qui suit.

Comme on peut le voir sur la figure 1, l'élément filtrant 14 est disposé dans le boîtier 12 de telle manière que ses deux extrémités axiales sont en appui axialement respectivement contre le couvercle inférieur 18 et contre le couvercle supérieur 20 de sorte que, à l'intérieur du boîtier 12, l'élément filtrant 14 délimite deux zones : une zone périphérique externe 26 et une zone radiale interne 30 qui est délimitée radialement vers l'extérieur par la paroi interne de l'enroulement de l'élément filtrant.

Ainsi, le fluide qui entre dans le boîtier par la bouche d'entrée 22 pénètre à l'intérieur de la zone périphérique externe 26. L'orifice de sortie 24 débouche quant à lui dans la partie radiale interne 30. Aussi, pour sortir du boîtier 12, le fluide qui rentre dans celui-ci doit obligatoirement traverser l'élément filtrant selon une trajectoire sensiblement radiale vers l'intérieur.

En fabriquant l'élément filtrant selon le procédé décrit dans le document FR-A 2 554 799, il est possible d'obtenir des enroulements dont le diamètre interne moyen est d'environ de 25 à 40 mm, soit un diamètre sensiblement égal au diamètre interne des enroulements réalisés autour d'un mandrin interne en carton.

Avantageusement, le diamètre interne moyen de l'enroulement de l'élément filtrant sera supérieur au vingtième de la valeur du diamètre externe de l'enroulement, de préférence, ce diamètre interne moyen sera supérieur au quart de la valeur du diamètre externe de l'enroulement et plus préférentiellement ce diamètre interne moyen sera compris entre un tiers et la moitié de la valeur du diamètre externe de l'enroulement.

En effet, il est nécessaire que ce diamètre interne présente une valeur suffisante pour que la superficie de cette surface interne ne soit pas trop petite, au risque d'une part d'avoir une partie radiale interne 30 qui présente une section en plan transversal trop réduite par rapport au débit de fluide, et au risque d'autre part que la superficie réduite de la paroi interne de l'enroulement entraîne un fort gradient de pression de fluide au niveau des spires internes de l'enroulement.

En effet, l'écoulement du fluide se faisant, globalement, radialement vers l'intérieur, le débit de fluide par unité de surface augmente au fur et à mesure que l'on se rapproche de l'axe de l'enroulement, et donc que la superficie de l'enveloppe cylindrique correspondant à un rayon donné diminue.

Avec un diamètre interne de l'enroulement trop petit, l'élément filtrant sans mandrin finirait par présenter les mêmes inconvénients, du point de vue des pertes de charge, qu'un élément filtrant comportant un mandrin en carton perforé.

Le produit fabriqué suivant le procédé décrit dans le document FR 2 554 799 présente une paroi intérieure ayant une section en coupe transversale, de forme polygonale qui permet de bloquer avantageusement l'élément filtrant dans le boîtier sans risque de rotation et d'assurer ainsi une simple fixation de cet élément filtrant. Comme cela est illustré sur les figures, il suffit de prévoir des moyens de centrage de l'élément filtrant dans le boîtier. Ces moyens de centrage peuvent par exemple prendre la forme de plots de centrage 32 qui sont formés en relief sur les faces internes des couvercles 18, 20 et qui s'étendent axialement dans la partie radiale interne 30 de l'élément filtrant en coopérant avec la paroi interne de ce dernier par leurs faces latérales légèrement coniques.

La paroi intérieure de section définie par la barre d'enroulement peut être également renforcée pour éviter totalement toute déformation éventuelle, en appliquant de l'eau ou une solution contenant une colle ou tout autre additif au moins au commencement de l'enroulement de la bande de papier conformément au document FR 2 554 799. Elle peut encore être renforcée par moletage ou tout autre procédé d'association des spires. Ceci permet de rigidifier la paroi interne de l'élément filtrant tout en gardant une perméabilité aux liquides. Le papier (ici ouate de cellulose) reste absorbant.

L'élément filtrant peut aussi comprendre, sur sa surface externe, des détrompeurs qui sont des éléments en relief ou en creux permettant de positionner l'élément de filtration afin de mettre en place l'élément filtrant dans une position définie à l'intérieur du boîtier. Ces détrompeurs peuvent être des gorges, des rainures ou des ergots. Ils sont disposés sur une ou plusieurs surfaces de l'élément filtrant et de préférence sur les surfaces extérieures cylindriques.

Une des applications possibles d'un élément filtrant selon l'invention concerne la microfiltration de l'huile d'un moteur à combustion interne de véhicule automobile afin de retenir les micro-particules qui sont une cause prépondérante de la pollution générée par les moteurs. A titre d'exemple, le demandeur a fabriqué notamment trois types d'éléments filtrants de tailles différentes pour une telle application. Les caractéristiques dimensionnelles approximatives de ces trois types d'éléments filtrants sont regroupées dans le tableau suivant.

| Diamètre extérieur (mm) | Diamètre intérieur (mm) | Surface intérieure (cm²) | Longueur axiale (m) | Métrage (m) | Poids (g) |
|---|---|---|---|---|---|
| 72 | 28 | 135 | 152 | 47 | 139 |
| 84 | 35 | 230 | 210 | 62.5 | 256 |
| 84 | 35 | 300 | 273 | 62.5 | 332 |

Le matériau en papier utilisé dans ce cas est constitué par une bande de papier comportant un seul pli de ouate de cellulose dont le grammage est de 20 g/m².

Cet exemple de réalisation de l'invention utilise de la ouate de cellulose.

Il est à noter que la ouate de cellulose présente des propriétés de résistance à l'humidité du fait de son procédé de fabrication qui prévoit l'incorporation d'un agent résistant humide.

De même, on pourrait aussi envisager d'utiliser une bande de papier comportant plusieurs plis identiques ou différents, et des feuilles d'autres grammages pourraient être utilisées en fonction de la nature du fluide à filtrer, en fonction du débit ou en fonction de la qualité de filtration recherchée.

Par ailleurs, l'élément filtrant n'est pas obligatoirement réalisé sous la forme d'un enroulement d'une feuille unique et continue de matériau en papier absorbant. On peut aussi prévoir de le réaliser à l'aide d'une série de feuilles de matériau en papier absorbant, organisées conformément à l'enseignement du document WO 96/05133 auquel on se référera utilement. Dans ce document, il est décrit un procédé de fabrication d'un rouleau de papier constitué de feuilles de papier enchevêtrées.

On pourrait encore utiliser des additifs en fonction de la destination de la filtration, afin d'obtenir un effet de traitement tel qu'un nettoyage, un effet bactéricide, ou un enrichissement du fluide filtré et récupéré, par l'incorporation d'un agent deshydratant, d'additifs alimentaires (dans le cas de la filtration des huiles alimentaires) etc...

On pourrait envisager d'appliquer ou de fixer au moins sur la surface de la paroi intérieure de l'élément filtrant, un ou plusieurs composants ayant un effet direct ou indirect sur les propriétés du fluide filtré.

Bien entendu un élément filtrant conforme aux enseignements de l'invention pourra être utilisé pour la filtration de toute huile en général, et même de tout type de fluide (gaz y compris). On peut citer par exemple les huiles de moteur, les huiles hydrauliques, les huiles de friture, etc.

## Revendications

1. Elément filtrant pour la filtration d'un fluide, dans un dispositif de filtration (10) comportant un boîtier cylindrique (12), dans lequel l'élément filtrant (14) forme un cylindre tubulaire agencé dans le boîtier (12) de manière à séparer une partie radiale externe (26) d'une partie radiale interne (30), le fluide circulant au travers de l'élément filtrant (14) selon une direction générale centripète, **caractérisé par le fait qu'**il consiste en un rouleau d'ouate de cellulose compact sans mandrin.

2. Elément filtrant selon la revendication 1, **caractérisé par le fait que** le diamètre interne moyen du cylindre tubulaire est supérieur au vingtième de son diamètre moyen externe.

3. Elément filtrant selon la revendication 2, **caractérisé par le fait que** le diamètre interne moyen du cylindre tubulaire est supérieur au quart de son diamètre moyen externe.

4. Elément filtrant selon la revendication 3, **caractérisé par le fait que** le diamètre interne moyen du cylindre tubulaire est compris entre un tiers et la moitié de son diamètre moyen externe.

5. Elément filtrant selon l'une quelconque des revendications précédentes, **caractérisé par le fait que** le diamètre interne moyen du cylindre tubulaire est supérieur à 25 mm.

6. Elément filtrant selon l'une quelconque des revendications précédentes, **caractérisé par le fait que** la paroi intérieure du cylindre tubulaire a une forme conique ou cylindrique et une section en coupe transversale de forme circulaire, polygonale ou autre.

7. Elément filtrant selon l'une quelconque des revendications précédentes, **caractérisé par le fait que** l'élément filtrant comprend sur sa surface au moins un détrompeur.

8. Elément filtrant selon l'une quelconque des revendications précédentes, **caractérisé par le fait que** l'élément filtrant (14) est constitué d'une unique feuille continue, enroulée selon un cylindre tubulaire.

9. Elément filtrant selon l'une quelconque des revendications 1 à 7, constitué d'une série de feuilles de matériau en papier absorbant, enchevêtrées pour former un cylindre tubulaire.

10. Elément filtrant selon l'une quelconque des revendications précédentes, dont la feuille comporte plusieurs plis.

11. Utilisation d'un élément filtrant selon la revendication 1 à la filtration d'huile dans un moteur de véhicule automobile.

## Claims

1. Filtering element for filtering of a fluid, in a filtering device (10) comprising a cylindrical case (12), in which the filtering element (14) forms a tubular cylinder arranged in the case (12) such as to separate an outer radial part (26) from an inner radial part (30), the fluid circulating through the filtering element (14) according to a general centripetal direction, **characterised in that** it consists of a roll of compact cellulose wadding without a mandrel.

2. Filtering element according to claim 1, **characterised in that** the mean inner diameter of the tubular cylinder is greater than a twentieth of its mean outer diameter.

3. Filtering element according to claim 2, **characterised in that** the mean inner diameter of the tubular cylinder is greater than a quarter of its mean outer diameter.

4. Filtering element according to claim 3, **characterised in that** the mean inner diameter of the tubular cylinder is between a third and half of its mean outer diameter.

5. Filtering element according to any one of the preceding claims, **characterised in that** the mean inner diameter of the tubular cylinder is greater than 25 mm.

6. Filtering element according to any one of the preceding claims, **characterised in that** the inner wall of the tubular cylinder has a conical or cylindrical shape and a transverse cross-section with a shape which is circular or polygonal, or another shape.

7. Filtering element according to any one of the preceding claims, **characterised in that** the filtering element comprises on its surface at least one locating unit.

8. Filtering element according to any one of the preceding claims, **characterised in that** the filtering element (14) consists of a single continuous sheet, wound according to a tubular cylinder.

9. Filtering element according to any one of claims 1 to 7, constituted by a series of sheets of absorbent paper material which overlap in order to form a tubular cylinder.

10. Filtering element according to any one of the preceding claims, the sheet of which comprises several plies.

11. Use of a filtering element according to claim 1, for filtering of oil in a motor vehicle engine.

## Patentansprüche

1. Filterelement für die Filtration einer Flüssigkeit, in einer Einrichtung zum Filtrieren (10) umfassend ein zylindrisches Gehäuse (12), in dem das Filterelement (14) einen röhrenförmigen Zylinder bildet, der in dem Gehäuse (12) derart angeordnet ist, daß er einen radialen äußeren Teil (26) von einem radialen inneren Teil (30) trennt, wobei die Flüssigkeit quer zu dem Filterelement (14) gemäß einer nach dem Mittelpunkt hin strebenden allgemeinen Richtung fließt, **gekennzeichnet durch** die Tatsache, daß es aus einer dicht gedrängten Rolle aus Zellstoffwatte ohne Hülse besteht.

2. Filterelement gemäß Anspruch 1, **gekennzeichnet durch** die Tatsache, daß der mittlere innere Durchmesser des röhrenförmigen Zylinders größer ist als ein Zwanzigstel seines mittleren äußeren Durchmessers.

3. Filterelement gemäß Anspruch 2, **gekennzeichnet durch** die Tatsache, daß der mittlere innere Durchmesser des röhrenförmigen Zylinders größer ist als ein Viertel seines mittleren äußeren Durchmessers.

4. Filterelement gemäß Anspruch 3, **gekennzeichnet durch** die Tatsache, daß der mittlere innere Durchmesser des röhrenförmigen Zylinders zwischen einem Drittel und der Hälfte seines mittleren äußeren Durchmessers umfasst ist.

5. Filterelement gemäß einem der vorhergehenden Ansprüche, **gekennzeichnet durch** die Tatsache, daß der mittlere innere Durchmesser des röhrenförmigen Zylinders größer als 25 mm ist.

6. Filterelement gemäß einem der vorhergehenden Ansprüche, **gekennzeichnet durch** die Tatsache, daß die Innenwand des röhrenförmigen Zylinders eine kegelförmige oder zylindrische Form und einen transversalen Querschnitt von runder, vieleckiger oder anderer Form aufweist.

7. Filterelement gemäß einem der vorhergehenden Ansprüche, **gekennzeichnet durch** die Tatsache, daß das Filterelement auf seiner Oberfläche mindestens eine Unverwechselbarkeitseinrichtung umfasst.

8. Filterelement gemäß einem der vorhergehenden Ansprüche, **gekennzeichnet durch** die Tatsache, daß das Filterelement (14) aus einer einzigen ununterbrochenen Bahn besteht, die gemäß einem röhrenförmigen Zylinder aufgerollt ist.

9. Filterelement gemäß einem der Ansprüche 1 bis 7, bestehend aus einer Reihe von Blättern aus absorbierendem Tissue-Papier, die zusammengewickelt sind um einen röhrenförmigen Zylinder zu bilden.

10. Filterelement gemäß einem der vorhergehenden Ansprüche, dessen Blatt mehrere Lagen umfasst.

11. Verwendung eines Filterelemente gemäß dem Anspruch 1 zum Filtrieren von Öl in einem Kraftfahrzeugmotor.
